# EUROPÄISCHE PATENTSCHRIFT

(11) **EP 3 323 495 B1**
(45) Veröffentlichungstag und Bekanntmachung des Hinweises auf die Patenterteilung: **29.04.2020**
(21) Anmeldenummer: 16199125.2
(22) Anmeldetag: 16.11.2016
(51) Int. Cl.: B01D 53/10, B01D 46/00, B01D 46/44, B01D 53/83, B01D 53/86, B01D 53/90, C10K 1/02, B01D 46/24

(54) **PRODUKTGASFILTER FÜR ABGASE VON HOLZ-GASREAKTOREN UMFASSEND FILTERKERZEN UND EINE ZEOLITH-EINSPEISUNG**
PRODUCT GAS FILTER FOR EXHAUST GASES OF WOOD-GASIFICATION REACTORS COMPRISING FILTER CANDLES AND A ZEOLITE INJECTION
FILTRE DE PRODUIT GAZEUX POUR GAZ D'ÉCHAPPEMENT DES RÉACTEURS DE GASIFICATION DU BOIS COMPRENANT DES BOUGIES FILTRANTES ET UNE ALIMENTATION DE ZÉOLITE

(43) Veröffentlichungstag der Anmeldung: 23.05.2018
(73) Patentinhaber: Glock Health, Science and Research GmbH, 2232 Deutsch Wagram (AT)
(72) Erfinder: Glock, Gaston, 9220 Velden (AT)
(74) Vertreter: Patentanwälte Barger, Piso & Partner

(56) Entgegenhaltungen:
- EP-A1- 3 067 407
- EP-A2- 1 870 444
- WO-A1-2008/089503
- WO-A1-2010/034791
- JP-A- 2005 028 294

## Beschreibung

Die Erfindung betrifft eine Vorrichtung zum Reduzieren von langkettigen Kohlenwasserstoffen im Produktgas von Holz-Gasreaktoren entsprechend dem Oberbegriff des Anspruches 1 und der EP 3 067 407 des Anmelders; mit anderen Worten ein Produktgasfilter mit einem Gehäuse, dem Produktgas von einem Holz-Gasreaktor mittels einer Produktgasleitung zugeführt wird.

Die genannte Druckschrift sieht ein Filter, bevorzugt in Form von Filterkerzen, für das Produktgas vor. Dabei wird dem Produktgas in unmittelbarer Nähe vor dem Erreichen der Filterkerzen Sauerstoff, bevorzugt Luft, zur Erhöhung der Ausbeute zugeführt.

Aus der EP 1 870 444 ist es bekannt, bei einem Holzvergaser ein Heißgasfilter aus keramischem Material für das Produktgas zu verwenden, um es in der Folge in einem Verbrennungsmotor einsetzen zu können, ohne ihm zu schaden.

Aus der WO2008/089503 ist es bekannt, das Produktgas einer Holzvergasungsanlage bei möglichst hoher Temperatur von mitgerissenen Partikeln zu reinigen, um ein Verstopfen des Filters durch bei niedrigeren Temperaturen anfallendem Teer zu verhindern.

Aus der JP 2005 028 294 ist es bekannt, einen Abgasstrom mittels eines Sackfilters zu reinigen. Dabei wird in Betriebspausen durch einen Luftstrom ein Filter-Zusatzmaterial auf das Filter aufgeblasen und dort möglichst gut fixiert. Im Betrieb wird dem Abgas ein alkalisches Agens im Ausmaß von zumindest 50 Gew.-% zugefügt, was beim Durchgang durch das Filter zu einer Reinigung des Abgases führt. Das Filter-Zusatzmaterial kann Ton, zB Zeolith, diatomeische Erde, Kalk, Perlit, Talkum, Magnesiumoxid und anders sein und soll fein gemahlen vorliegen. Die Reinigung eines Abgasstroms unterscheidet sich grundlegend von der eines Produktstroms. So ist schon die Zugabe eines alkalischen Agens bei der Holzvergasung völlig ausgeschlossen.

Aus der WO2010/034 791 ist es bekannt, bei Abgasen, wie sie bei der Roheisenherstellung anfallen eine Reinigung durch Zugabe eines reaktiven oder absorbierenden Materials in den Gasstrom zu bewirken Am Rande wird auch die Reinigung von Produktgasen, die bei der Kohlevergasung entstehen, erwähnt. Das zugegebene Material, Additiv genannt, enthält ein Reagenz und gegebenenfalls ein Adsorptionsmittel. Das Reagenz ist beispielsweise CaCO₃, Ca(OH)₂, Mg(OH)₂, Natriumkarbonat oder eine Mischung davon. Als Adsorptionsmittel werden Herdofenkoks, Aktivkohle, Aktivkoks, und Zeolith genannt. Die Reinigung des Produktgases einer Kohlevergasung unterscheidet sich wesentlich von der einer Holzvergasung, die Zugabe eines jeden der genannten Reagenzien verbietet sich von selbst.

Als langkettige Kohlenwasserstoffe können beispielsweise die bei der Biomassevergasung üblicherweise anfallenden wie: Phenol, Acenaphthylen, Naphtalion, Methylnaphthalin, Phenanthren, Kresol, Biphenyl, Fluren und Anthracen genannt werden. Bei der Holzvergasung wird deren Bildung durch die stets vorhandenen Terpene und auch das Lignin bewirkt.

Als Reaktoren sind alle im Stand der Technik bekannten zu nennen, somit insbesondere solche mit aufsteigender Vergasung, mit absteigender Vergasung, mit 2 stufiger Vergasung, mit stationärer Wirbelschicht und auch solche mit zirkulierender Wirbelschicht.

Holz-Gasreaktoren im Sinne der Erfindung produzieren aus Biomasse ein Produktgas, das in der Folge auf unterschiedlichste Weise verwendet werden kann, beispielsweise in einem Blockkraftwerk, in einer Turbine und dergleichen mehr. Dabei ist es notwendig, im Produktgas enthaltene Feststoffe abzuscheiden. Derartige Feststoffe sind bei Gasreaktoren zumeist unverbrannte Kohlenstoffpartikel, doch können in geringen Mengen auch andere Beimengungen enthalten sein. Hier wird sowohl vom jeweiligen Gesetzgeber als auch von den Betreibern zunehmend auf das Entfernen des sogenannten Feinstaubs gedrängt, und es werden derartige, stets strenger werdende Grenzwerte vorgeschrieben.

Eine Möglichkeit, diese Feststoffe abzuscheiden besteht in einer klassischen Filterung, wobei die unterschiedlichsten Filter verwendet werden können, es soll nur auf Filterkerzen und Filtersäcke verwiesen werden.

Eine alternative Technologie zum Filtern ist die Verwendung eines Katalysators, bei dem diese Feststoffpartikel, soweit dies chemisch möglich ist, katalytisch verbrannt werden. Beide Verfahren hatten ihre Vor- und Nachteile.

Es kommt nun dazu, dass die Gesetzgeber in verschiedenen Ländern nicht nur eine zunehmend bessere Filterung von Produktgasen und Rauchgasen allgemein verlangen sondern auch, als ein Novum, fordern, dass die im Produktgas verbleibenden Anteile an langkettigen Kohlenwasserstoffen reduziert werden müssen. Um langkettige Kohlenwasserstoffe aus der Biomassevergasung zu reduzieren wird zur Zeit höchstes Augenmerk auf den eingesetzten Brennstoff und dessen Stückigkeit gelegt. Verschiedentlich spielt auch der Feuchtigkeitsgehalt des Brennstoffes eine Rolle. Dazu kommt, dass derartige Bestandteile den der Biovergasung nachgeschalteten Aggregaten wie z.B. Motoren, schaden, da sie auskondensieren und zum Verkleben neigen.

Es ist das Ziel der Erfindung, eine derartige Vorrichtung bzw. ein derartiges Verfahren zu schaffen, das in der Lage ist, auch die Vorgaben der Zukunft zu erfüllen und somit insbesondere in der Lage ist, langkettige Kohlenwasserstoffe aus dem Produktgas zumindest weitgehend zu entfernen und bevorzugt in einem den Fein- und Feinststaub abzufiltern.

Erfindungsgemäß werden diese Ziele durch die im kennzeichnenden Teil des Anspruches 1 enthaltenen Merkmale erreicht; mit anderen Worten, es wird auf ein vom Produktgasstrom zu durchquerendes Filter bzw. einen Filterkuchen ein Auftrag an feingemahlenen Zeolith aufgebracht, durch den insbesondere langkettige Kohlenwasserstoffe katalytisch über den Zeolithfilterkuchen gecrackt werden und mit ihm aus dem Produktgasstrom ausgebracht werden kann.

In einer bevorzugten Ausführungsform weist ein erfindungsgemäßes Produktgasfilter zumindest zwei Filterkerzen auf, durch die das Produktgas strömt, und auf deren Oberfläche die Partikel ausgefiltert werden, was zum Aufbau eines Filterkuchens führt, wobei, wie bei derartigen Filtern bekannt, bei Übersteigen des Druckabfalls des durchfließenden Produktgasstromes über einen vorgegebenen Grenzwert der Filterkuchen abgetrennt und aus dem Filter ausgebracht wird. Erfindungsgemäß wird dabei nach dem Entfernen des Filterkuchens feinvermahlener Zeolith im Bereich der Filterkerze(n) in den Produktgasstrom geblasen, legt sich als Grundlage des Filterkuchens an die Filterkerze an und bildet so eine Schicht oder einen Mantel, wenn auch extrem dünn, der in der Lage ist, die im Produktgasstrom enthaltenen langkettigen Kohlenwasserstoffe zu reduzieren. Mit dem nächsten Abblasen bzw. Absprengen des Filterkuchens wird mit diesem auch der verbrauchte katalytisch wirkende Zeolith ausgebracht.

Zeolith ist im Stand der Technik zur Abscheidung von Quecksilber aus Rauchgas fossiler Herkunft verwendet worden, wie in der US 5,505,766 in einem Nebensatz erwähnt.

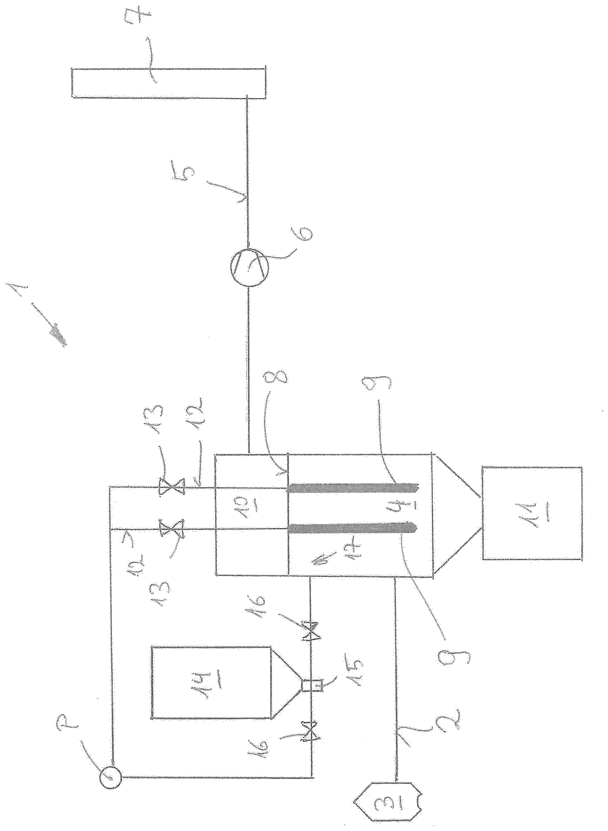

Die Erfindung wird im Folgenden anhand einer rein schematischen Darstellung, mit einer einzigen Figur näher erläutert.

Die einzige Figur stellt, rein schematisch, eine erfindungsgemäße Einrichtung 1 zur Produktgasfilterung dar. Wie im technischen Jargon werden auch hier die Gesamtheit des Filters mit allen Umhüllungen, Armaturen, etc. und das Filter an sich oft synonym als "Produktgasfilter" oder kurz "Filter" benannt, da aus dem Zusammenhang die jeweilige Bedeutung zweifelsfrei erschließbar ist. Der Einrichtung 1 wird ein Produktgasstrom, der durch Rohrleitungen 2 von einem Holz-Gasreaktor 3 (nur angedeutet) zum eigentlichen Filter 4 führt, zugeführt. Vom Filter 4 führt eine Reingasleitung 5, in der ein Gebläse 6 angeordnet ist, zu einer Gasumwandlungsmaschine in Form einer Turbine, einer Verbrennungskraftmaschine etc.

Das Filter 4 besteht im Wesentlichen aus einem Gehäuse und einem Trennboden 8, an dem mehrere, in dargestellten Ausführungsbeispiel sind es zwei, Filterkerzen 9 nach unten, zum ungereinigten Produktgas hin ragend, angeordnet sind. Der Trennboden 8 und seine Verbindung zum Gehäuse und zu den Filterkerzen 9 ist so dicht ausgebildet, dass das durch die Produktgasleitung 2 kommende Produktgas nur durch die Filterkerzen 9 hindurch in den Sammelraum 10 für das Reingas oberhalb des Trennbodens 8 und von dort in die Reingasleitung 5 gelangen kann.

Der untere Bereich des Filters 4 ist konisch oder sich auf andere Weise verjüngend ausgestaltet und führt an seinem unteren Ende, im dargestellten Ausführungsbeispiel ohne Absperrvorrichtung, in einen Staubbehälter 11. Als Absperrorgan kann beispielsweise eine Zellradschleuse vorgesehen werden, auch einfache Klappen sind möglich.

Die Filterkerzen 9 sind, wie aus dem Stand der Technik bekannt, über Druckluftleitungen 12 und selektiv betätigbare Absperrorgane 13 mit einem Druckreservoir P verbunden.

Die bisher beschriebene Vorrichtung entspricht durchaus konventionellen Produktgasfiltern, deren Betrieb, da er dem des Standes der Technik entspricht, nur kurz dargestellt werden soll:
Im Normalbetrieb (Anfahrbetrieb und Notbetrieb werden hier nicht beschrieben) strömt das Produktgas von Holz-Gasreaktor 3 durch die Produktgasleitung 2 in den Filter 4, von dort durch die Filterkerzen 9 in den Sammelraum 10, von dort durch die Reingasleitung 5 und das eventuell vorgesehene oder auch nicht vorgesehene Gebläse 6 in die Gasumwandlungseinheit. Dabei wird beim Durchtritt durch die Oberfläche der Filterkerzen 9 festes Material aus dem Produktgasstrom abgefiltert, es bildet sich ein Filterkuchen aus. Dieser Filterkuchen verbessert einerseits die Filtereigenschaften, andererseits wird durch den zunehmenden Aufbau des Filterkuchens der Druckabfall an den Filterkerzen 9 erhöht und so der Durchfluss beeinträchtigt.

Wenn vorgegebene Grenzwerte des Druckabfalls erreicht werden, die dazu notwendigen Sensoren werden weiter unten beschrieben, so wird das zugehörige Absperrorgan 13 der jeweils betrachteten Filterkerze geöffnet und es erfolgt ein kurzer, aber heftiger Druckstoß entgegen der Durchflussrichtung des Produktgases durch die Filterkerze, durch die der Filterkuchen richtiggehend abgesprengt wird und, der Schwerkraft folgend, nach unten in den Staubbehälter 11 gelangt. Bereits nach kurzer Zeit, meist nach nur wenigen Millisekunden, wird das Absperrorgan 13 wieder geschlossen und es beginnt sich der nächste Filterkuchen aufzubauen. Es kann auf diese Weise bei richtiger Auslegung in Kenntnis der Zusammensetzung des Produktgases und der einzuhaltenden Reinheitsvorschriften für das Reingas trotz der über der Zeit fluktuierenden Filtereigenschaften die gewünschte Reinheit, über die Zeit betrachtet, erreicht werden.

Um nun einerseits auch die feinsten Feinstaubfraktionen besser abscheiden zu können und andererseits, darüber hinaus und erfindungsgemäß, auch langkettige Kohlenwasserstoffe zu reduzieren, ist erfindungsgemäß ein Vorratsbehälter 14 für Zeolithmaterial vorgesehen. Dessen unteres Ende mündet in eine Venturidüse 15, die, bei passend geöffneten Absperrorganen 16, von Druckluft, kommend aus einem Vorratsgefäß P, oder einem Kompressor, durchströmt wird. Diese Druckluft nimmt nun beim Durchtritt durch die Venturidüse 15 aus dem Vorratsbehälter 14 fein vermahlenen Zeolith mit und zerstäubt ihn durch eine oder mehrere Düsen 17 ins Innere des Filters 4, bevorzugt etwa im Bereich der Filterkerzen 9.

Betrieben wird diese Vorrichtung derart, dass stets nach dem Absprengen von Filterkuchen von einer der Filterkerzen 9 die beiden Absperrorgane 16 kurz geöffnet werden, sodass Druckluft durch die Venturidüse 15 strömt und dabei fein vermahlenen Zeolith mit sich nimmt. Dieser wird beim Einblasen ins Innere des Gehäuses des Filters 4 zerstäubt und mit dem Produktgasstrom bevorzugt (hier ist der Strömungswiderstand wegen des fehlenden Filterkuchens geringer als in der (den) anderen Kerze(n)) zur gerade gereinigten Filterkerze 9 transportiert, wo er sich an deren Filteroberfläche anlegt. So bildet er im Wesentlichen die erste Schicht und damit die Grundlage für den kommenden aufzubauenden Filterkuchen. Beim Durchtritt durch diesen Filterkuchen und schlussendlich die, wenn auch dünne Schichte, Zeolith, werden langkettige Kohlenwasserstoffe reduziert und der verbrauchte katalytische Zeolith wird beim nächsten Absprengen des Filterkuchens in den Staubbehälter 11 ausgebracht.

Die Erfindung ist nicht auf die beschriebene und dargestellte Ausführungsform beschränkt, sondern kann verschiedentlich abgeändert und adaptiert werden. So wird in den meisten Fällen ein eigenes Startprogramm vorgesehen sein, um schon zu Beginn des Filterns keine ungereinigten Produktgase zur weiteren Verwendung bzw. in die Umgebung zu bringen. Dafür gibt es zahlreiche Vorbilder im Stand der Technik, die in Kenntnis der Erfindung leicht mit dieser zu kombinieren sind. Derartige zusätzliche Filter können auch einer Filterkerze nach dem Abblasen zugeschaltet werden, bis ein neuer Filterkuchen ausgebildet ist. Die entsprechenden Züge und Ventile bzw. Klappen, etc. sind aus Gründen der Übersichtlichkeit, und weil sie mit dem Kern der Erfindung nicht ursächlich verknüpft sind, ebenfalls nicht dargestellt. Dies gilt auch für die Sensoren, die den Betrieb überwachen, insbesondere die Druckmessgeräte und die Durchflussmeßgeräte, durch die auf den Zustand der Filterkuchen geschlossen werden kann.

Im Falle des Vorsehens mehrerer Filterkerzen sind die Einlässe für den zerstäubten Zeolith entsprechend zu vermehren, es können die Lagen der einzelnen Einblasdüsen den jeweiligen Filterkerzen angepasst werden und unter Umständen auch einzeln oder in Gruppen aktiviert werden. Ob dabei auch mehrere Vorratsbehälter 14 vorgesehen werden, hängt von den Einzelumständen ab und ist vom Fachmann auf dem Gebiet der allgemeinen Gasreinigung in Kenntnis der Erfindung und des Anwendungsfalles leicht zu entscheiden.

Die verwendbaren Materialien sind die gleichen wie im Stand der Technik, es ändert sich durch die Erfindung daran nichts, sodass es nicht notwendig erscheint, hier darauf einzugehen. Die Steuerung der Anlage entspricht, mit Ausnahme der erfindungsgemäß zu betreibenden Filterkerzen und der Zeolitheinblasung, ebenfalls dem Stand der Technik, diese beiden erfindungsgemäßen Steuerungen sind oben beschrieben worden, Details können anhand weniger, einfacher Tests eruiert werden.

Die Korngröße des einzublasenden Zeoliths beträgt in üblichen Anwendungsfällen minimal 15µm und maximal 50µm. Durch die Modifikation des Zeoliths kann die jeweilige Produktgaszusammensetzung berücksichtigt werden, durch einige wenige Versuche mit unterschiedlicher Korngröße bzw. Korngrößenverteilungen kann das jeweilige Optimum, auch in Abhängigkeit der verwendeten Filterkerzen, gefunden werden. Die genaue Spezifikation des eingesetzten natürlichen bzw. synthetischen Zeoliths ist vom jeweiligen Produktgaserzeuger abhängig und bedarf hier keiner näheren Erläuterung.

**Bezugszeichenliste:**

| | | | |
|---|---|---|---|
| 01 | Filter, insgesamt | 10 | Sammelraum |
| 02 | Rohgasleitung | 11 | Staubbehälter |
| 03 | Holz-Gasreaktor | 12 | Druckluftleitung(en) |
| 04 | Eigentliches Filter | 13 | Absperrorgan(e) |
| 05 | Reingasleitung | 14 | Vorratsbehälter |
| 06 | Gebläse | 15 | Venturidüse |
| 07 | Kamin | 16 | Absperrorgan(e) |
| 08 | Trennboden | 17 | Düse(n) |
| 09 | Filterkerze(n) | | |

## Patentansprüche

1. Produktgasfilter zum Reduzieren des Gehaltes langkettiger Kohlenwasserstoffe im Produktgas von Holz-Gasreaktoren, mit einem Gehäuse, dem Produktgas von einem Holz-Gasreaktor (3) mittels einer Produktgasleitung (2) zugeführt wird, und von dem Reingas durch eine Reingasleitung (5) abgeführt wird, wobei das Filter (1) durch einen Trennboden (8) gasdicht in zwei Teile geteilt ist, wobei die Produktgasleitung (2) in einen, den unteren, Bereich (4) einmündet und die Reingasleitung (5) vom oberen, dem Sammelraum (10) ausgeht, wobei weiters am Trennboden (8) zumindest zwei Filterkerzen (9) angeordnet sind, die einzeln mittels Druckluftleitungen (12) mit einer Druckluftquelle (P) verbindbar sind und in den unteren Bereich (4) ragen, **dadurch gekennzeichnet, dass** ein Zeolithbehälter (14) über eine, mit einer Druckluftquelle (P) verbindbare, Venturidüse (15) und eine absperrbare Leitung mit dem unteren Bereich (4) des Filters (1) verbunden ist.

2. Filter nach Anspruch 1, **dadurch gekennzeichnet, dass** der unterste Abschnitt des unteren Bereichs (4) einen verjüngten Querschnitt aufweist und in einen Staubbehälter (11) mündet.

3. Filter nach Anspruch 1 oder 2, **dadurch gekennzeichnet, dass** in der Leitung von der Druckluftquelle (P) über die Venturidüse (15) zum unteren Bereich (4) jeweils vor und nach der Venturidüse ein Absperrorgan (16) vorgesehen ist.

4. Filter nach einem der Ansprüche 1 bis 3, **dadurch gekennzeichnet, dass** in den Druckluftleitungen (12) Absperrorgane (13) vorgesehen sind.

5. Filter nach einem der voranstehenden Ansprüche, **dadurch gekennzeichnet, dass** in der Reingasleitung (5) ein Gebläse (6) vorgesehen ist, das das Reingas vom Filter (1) weg befördert.

6. Filter nach einem der voranstehenden Ansprüche, **dadurch gekennzeichnet, dass** in der Produktgasleitung (2) und/oder dem unteren Bereich (4) und/oder dem Sammelraum (10) und/oder der Reingasleitung (5) Druckmessgeräte und/oder Durchflussmeßgeräte vorgesehen sind, die mittels zumindest einer Datenleitung mit einer Steuervorrichtung bzw. Regelvorrichtung in Verbindung stehen.

7. Filter nach Anspruch 6, **dadurch gekennzeichnet, dass** jeder Filterkerze (9) ein eigener Satz von Druckmessgeräten und/oder Durchflussmeßgeräten zugeordnet ist.

8. Filter nach einem der Ansprüche 5 bis 7, **dadurch gekennzeichnet, dass** die Absperrorgane (13, 16) mit der Steuervorrichtung bzw. Regelvorrichtung in Wirkverbindung stehen.

9. Betrieb eines Filters nach einem der Ansprüche 1 bis 8, **dadurch gekennzeichnet, dass** bei erhöhtem Druckabfall an den Filterkerzen (9) eine bzw. die Filterkerze mit erhöhtem Druckabfall mit Druckluft beaufschlagt wird, und dass anschließend Zeolithpulver in den unteren Bereich (4) eingeblasen wird.

10. Betrieb nach Anspruch 9, **dadurch gekennzeichnet, dass** der erhöhte Druckabfall an den Filterkerzen (9) durch Druckmessgeräte und/oder Durchflussmeßgeräte festgestellt wird.

## Claims

1. Product gas filter for reducing the content of long-chain hydrocarbons in the product gas of wood gas reactors, comprising a housing to which product gas from a wood gas reactor (3) is supplied by means of a product gas line (2) and from which clean gas is discharged through a clean gas line (5) ; wherein the filter (1) by a separating tray (8) is divided gas-tight into two parts, the product gas line (2) leading to one, the lower part, and the clean gas line (5) departing from the upper, the collecting space (10) whereby further from the separating platform (8) at least two filter cartridges (9), which are individually connectable by means of compressed air lines (12) with a compressed air source (P), protrude in the lower part (4), **characterized in that** a zeolite container (14) is connected via a Venturi nozzle (15) which is connectable with a compressed air source (P) and a lockable line, to the lower part (4) of the filter (1).

2. Filter according to Claim 1, **characterized in that** the lower most portion of the lower part (4) has a tapered cross section and opens into a dust container (11).

3. Filter according to Claim 1 or 2, **characterized in that** in the line from the compressed air source (P) via the Venturi nozzle (15) to the lower part (4), a shut-off device (16) is provided, in each case before and after the Venturi nozzle.

4. Filter according to one of claims 1 to 3, **characterized in that** in the compressed air lines (12) shut-off devices (13) are provided.

5. Filter according to one of the preceding claims, **characterized in that** in the clean gas line (5), a fan (6) is provided, which carries the clean gas from the filter (1) away.

6. Filter according to one of the preceding claims, **characterized in that** in the product gas line (2) and / or the lower part (4) and / or the collecting space (10) and / or the clean gas line (5) pressure gauges and / or flow meters are provided, which are connected by means of at least one data line with a control device or regulating device.

7. Filter according to Claim 6, **characterized in that** each filter cartridge (9) is assigned its own set of pressure gauges and / or flow meters.

8. Filter according to one of Claims 5 to 7, **characterized in that** the shut-off elements (13, 16) are in operative connection with the control device or regulating device.

9. Operation of a filter according to one of Claims 1 to 8, **characterized in that** at increased pressure drop at the filter cartridges (9) one or the filter cartridge with higher pressure drop is subjected to compressed air, and that subsequently zeolite powder is blown into the lower part (4).

10. Operation according to Claim 9, **characterized in that** the increased pressure drop across the filter cartridges (9) is detected by pressure gauges and / or flowmeters.

## Revendications

1. Filtre de produit gazeux destiné à réduire la teneur en hydrocarbures à chaîne longue dans le produit gazeux de réacteurs de gazéification du bois, comprenant une enceinte à laquelle le produit gazeux est amené depuis un réacteur de gazéification du bois (3), via une conduite de produit gazeux (2), et à partir de laquelle le gaz épuré est évacué via une conduite de gaz épuré (5), le filtre (1) étant divisé en deux parties de façon étanche au gaz par une paroi de séparation (8), la conduite de produit gazeux (2) débouchant dans une partie (4), à savoir la partie inférieure, et la conduite de gaz épuré (5) partant de la chambre collectrice (10) située en haut, sachant qu'en outre il est prévu sur la paroi de séparation (8), au moins deux bougies filtrantes (9) qui peuvent être reliées individuellement à une source d'air comprimé (P), via des conduites d'air comprimé (12), et qui avancent dans la partie inférieure (4), **caractérisé en ce qu'**un réservoir de zéolithe (14) est raccordé à la partie inférieure (4) du filtre (1) par l'intermédiaire d'un tube de Venturi (15), pouvant être relié à une source d'air comprimé (P), et d'une conduite pouvant être fermée.

2. Filtre selon la revendication 1, **caractérisé en ce que** la portion inférieure la plus extrême de la partie inférieure (4) présente une section transversale rétrécie et débouche dans un collecteur de poussières (11).

3. Filtre selon la revendication 1 ou 2, **caractérisé en ce que**, dans la conduite menant de la source d'air comprimé (P) à la partie inférieure (4), via le tube de Venturi (15), il est prévu un organe d'arrêt (16), respectivement en amont et en aval du tube de Venturi (15).

4. Filtre selon l'une des revendications 1 à 3, **caractérisé en ce que** des organes d'arrêt (13) sont prévus dans les conduites d'air comprimé (12).

5. Filtre selon l'une des revendications précédentes, **caractérisé en ce qu'**il est prévu dans la conduite de gaz épuré (5), un ventilateur (6) qui évacue le gaz épuré du filtre (1).

6. Filtre selon l'une des revendications précédentes, **caractérisé en ce qu'**il est prévu, dans la conduite de produit gazeux (2) et/ou la partie inférieure (4) et/ou la chambre collectrice (10) et/ou la conduite de gaz épuré (5), des appareils de mesure de pression et/ou des appareils de mesure de débit qui sont reliés par au moins une ligne de données à un dispositif de commande ou un dispositif de régulation.

7. Filtre selon la revendication 6, **caractérisé en ce qu'**un ensemble distinct d'appareils de mesure de pression et/ou d'appareils de mesure de débit est associé à chaque bougie filtrante (9).

8. Filtre selon l'une des revendications 5 à 7, **caractérisé en ce que** les organes d'arrêt (13, 16) sont en liaison fonctionnelle avec le dispositif de commande ou le dispositif de régulation.

9. Fonctionnement d'un filtre selon l'une des revendications 1 à 8, **caractérisé en ce que**, en cas de chute de pression accrue sur les bougies filtrantes (9), de l'air comprimé est envoyé à l'une des bougies filtrantes (9), respectivement à la bougie filtrante présentant la chute de pression accrue, et **en ce que** l'on injecte ensuite de la poudre de zéolithe dans la partie inférieure (4).

10. Fonctionnement selon la revendication 9, **caractérisé en ce que** la chute de pression accrue sur les bougies filtrantes (9) est détectée par des appareils de mesure de pression et/ou des appareils de mesure de débit.
